Europäisches Patentamt

European Patent Office

Office européen des brevets

(11) Publication number: **0 215 754**
**A1**

# EUROPEAN PATENT APPLICATION

(21) Application number: 86850205.5

(51) Int. Cl.⁴: **F 02 B  37/00**

(22) Date of filing: **10.06.86**

(30) Priority: **05.07.85  SE 8503362**

(43) Date of publication of application: **25.03.87**
**Bulletin 87/13**

(84) Designated Contracting States: **DE FR GB IT SE**

(71) Applicant: **AB VOLVO, Torslanda, S-405 08 Göteborg (SE)**

(72) Inventor: **Borila, Yurij George, Redbergvägen 34, S-41665 Göteborg (SE)**

(74) Representative: **Hellborg, Torild et al, H. Albihns Patentbyra AB Box 7664, S-103 94 Stockholm (SE)**

(54)    **An arrangement for supercharging a multi-cylinder internal combustion engine.**

(57)    The invention relates to an arrangement for supercharging a multi-cylinder internal combustion engine (1), the exhaust manifold of which engine (1) is divided into at least two separate sections (3, 4), each connected to a respective group of the cylinders of the engine. The arrangement includes at least two superchargers (5, 6), each comprising a turbine (7, 8) for connection to the outlets of exhaust manifold sections (3, 4), and a compressor (9, 10) which is driven by the turbine and the outlet of which is connected to the engine inlet manifold. The turbine (7, 8) in each supercharger (5, 6) is connected to the outlets of at least two exhaust manifold sections (3, 4) in a manner such that the pressure pulses in the exhaust gases from one section (3, 4) are supplied to the turbine (7, 8) substantially without influencing the course of the pressure in remaining sections (3, 4). A valve arrangement (25) is arranged upstream of the turbine (8), and a valve arrangement is arranged preferably upstream of the compressor (10) in at least one of the superchargers (6), this supercharger (6), or these superchargers (6), being smaller than the remaining superchargers (5).

An arrangement for supercharging a multi-cylinder internal combustion engine.

The present invention relates to an arrangement for supercharging a multi-cylinder internal combustion engine, in which the engine exhaust manifold is divided into at least two separate sections, each having its individual inlet and each being connected to a respective group of engine cylinders, the arrangement incorporating at least two superchargers each comprising a turbine for connection to the outlets of respective exhaust manifold sections, and a compressor driven by the turbine, the outlet of said compressor being connected to the inlet manifold of the engine.

It is well known that supercharging with the aid of superchargers in the form of exhaust-driven turbo-compressors is the most significant method of increasing the effective mean pressure of internal combustion engines. The specific power rating of internal combustion engines has increased considerably since the advent of the use of turbo-compressors, and this tendency will remain unchanged for as long as there is a need for greater power concentration, lower fuel consumption, and lower production costs.

A turbo-compressor is a dynamic gas machine which is capable of dealing with large gas flows within a small volume, and thus constitutes an extremely suitable supplement to an internal combustion piston engine, which is a volumetric gas machine and capable of achieving high pressure ratios. However, it is difficult to achieve relative adaptation between a turbo-compressor and an internal combustion engine, and in particular an internal combustion engine for automotive vehicles. The requirement of good engine torque characteristic is counteracted by the natural flow characteristic of the turbo-compressor, namely an increasing charging pressure, or booster pressure, with increasing engine speeds. The requirement of good accompaniment on the part of the turbo-compressor is counteracted by the principles under which the compressor functions, namely that there is no mechanical connection with the engine. The requirement of low energy consumption within wide ranges of speed and load is counteracted by the dependency of turbo-compressor efficiency on the gas flow and charging pressure. For these reasons the adaptation of a turbo-compressor to an internal combustion engine becomes a matter of compromising between the maximum power, torque characteristic, engine speed and thermal and mechanical limitations, and also limitations with regard to the discharge of exhaust gases. When making this compromise, importance is often placed on engine performance at low engine speeds, to the detriment of engine performance at high engine speeds. When the specific power rating of an engine is increased, it is more difficult to adapt the turbo-compressor and the engine in relation to one another. Consequently, there is a great need for an advanced supercharging system which will satisfy satisfactorily those requirements placed on automotive engines of high specific power ratings.

In order to produce advanced supercharging systems, there have been used, for example, superchargers which incorporate turbines with variable geometry, parallel superchargers, and superchargers connected in series. One disadvantage with such systems, however, is that either the improvement in engine performance achieved therewith is extremely limited, or that the systems are also relatively complicated and therewith become expensive and less reliable.

Hitherto known supercharging arrangements which incorporate a plurality of superchargers utilize the balanced pressure method when supercharging. The disadvantage with this method, however, is that the pulse energy in the exhaust gases is utilized inefficiently at partial engine loads and at low engine speeds.

The object of the present invention is to provide an arrangement of the kind described in the introduction for supercharging a multi-cylinder internal combustion engine which will avoid the aforementioned drawbacks and enable at least one of the superchargers to be engaged and disengaged as required without losing the pulse energy in the exhaust gases. This object is achieved in accordance with the invention by connecting the turbine in each supercharger to the outlet from respective sections in the exhaust manifold system in a manner such that the pressure pulses in the exhaust gases from one section are supplied to the turbine substantially without influencing the course of the pressure in remaining sections; and by arranging a valve means upstream of the turbine in at least one of the superchargers, this supercharger, or these superchargers, being smaller than the remaining superchargers.

The invention will now be described in more detail with reference to the accompanying drawings, in which

Fig. 1 is a schematic view of one embodiment of an arrangement according to the invention;

Fig. 2 is a schematic, longitudinal sectional view of a pulse converter incorporated in the arrangement illustrated in Fig. 1; and

Fig. 3 is a schematic view of a further embodiment of an arrangement according to the invention.

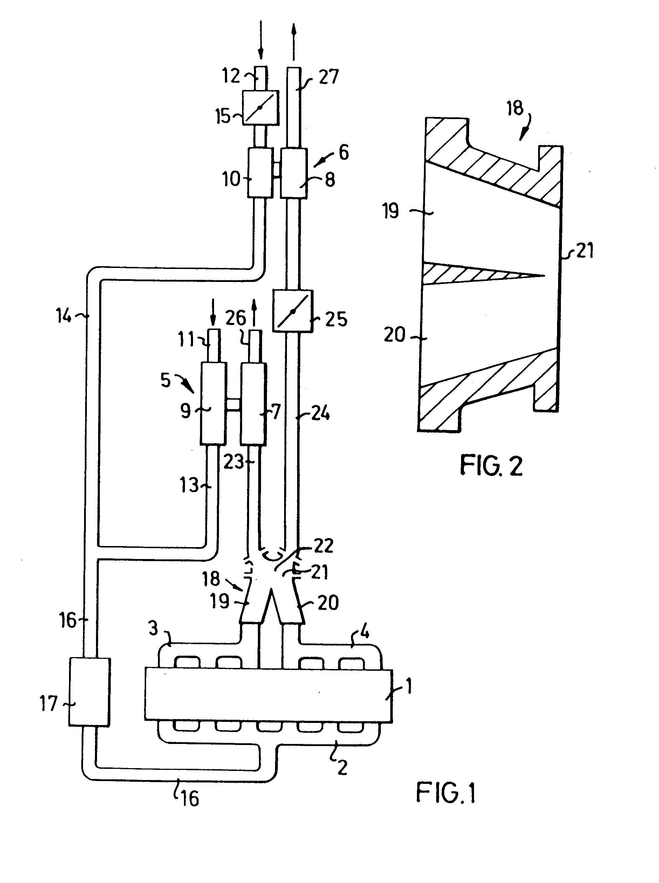

Fig. 1 illustrates a first embodiment of an arrangement according to the invention. This arrangement is intended for supercharging a multi-cylinder internal combustion engine 1, illustrated highly schematically in the figure. Although the engine 1 illustrated in Fig. 1 is a six cylinder engine, it will be understood that engines incorporating a different number of cylinders are also conceivable. The engine 1 is provided with an inlet manifold 2 and an exhaust manifold which is divided into two sections 3 and 4.

Connected to the engine 1 are two superchargers 5 and 6 of mutually different size. Each supercharger 5 and 6 comprises a respective turbine 7 and 8 which are intended to be driven by the exhaust gases of the engine 1, and a respective compressor 9 and 10 driven by said turbine and intended for supplying compressed combustion air to the inlet manifold 2 of the internal combustion engine 1.

As will be seen from Fig. 1, the compressor 9 has a constantly open suction pipe 11, and the compressor 10 has a suction pipe 12. An outlet pipe 13 extends from the compressor 9, and an outlet pipe 14 extends from the compressor 10. A closure valve 15 is incorporated in the suction pipe 12. The outlet pipes 14 and 13 are together connected to a common pipe 16, which is connected to the inlet manifold 2 of the engine 1 and which incorporates a conventional intercooler 17.

The outlets from respective exhaust manifold sections 3 and 4 are connected to a pulse converter 18, more specifically to a respective one of the two inlets 19 and 20 of said converter. The outlet 21 of the pulse converter 18 is connected to a collecting chamber 22 of limited volume and the chamber is connected to two connecting pipes 23 and 24, of which the pipe 23 leads to the inlet of the turbine 7, whereas the connecting pipe 24 leads to the inlet of the turbine 8. The connecting pipe 24 also incorporates a closure valve 25. Outlet pipes 26 and 27 extend from the outlets of respective turbines 7 and 8, for removing the waste gases.

The pulse converter 18 is shown in more detail in Fig. 2. The pulse converter 18 has two inlets 19 and 20, to which respective exhaust manifold sections 3 and 4 are connected. The inlets 19 and 20 preferably exhibit a decreasing cross-sectional area in the flow direction, which means that part of the pressure in the exhaust pulses is converted to kinetic energy. The pulse converter 18 has its smallest cross-sectional area at the region where the two inlets 19 and 20 meet. This means that the pressure pulses from the one inlet will have only a small influence on the course of the pressure in the manifold section connected to the other inlet.

The incorporation of the pulse converter 18 enables the superchargers 5 and 6 to be given mutually different sizes while using turbines 7 and 8 with simple inlets. Turbines with simple inlets provide a higher efficiency in combination with a pulse converter, as a result of the more advantageous introduction of the pulses at the turbine inlet. The valves 15 and 25 also enable the supercharger 6 to be engaged and disengaged as required. The variation in size of the supercharger enables the size of the supercharger to be adapted more readily to prevailing operating conditions, which further increases the efficiency of the supercharger.

The mutual relationship between the sizes of the superchargers 5 and 6 depends, to some extent, on the practical use of the superchargers. When supercharging engines for long distance vehicles, the supercharger which is constantly engaged, in the illustrated embodiment the supercharger 5, should be larger than the disengageable supercharger 6. Thus, the supercharger 6 is held disengaged under the majority of operating conditions and is only engaged when a high engine power and high engine speed is required in order to maintain a high vehicle speed under particular driving conditions. This provides greater driving comfort, i.e. a higher maximum torque at low engine speeds, improved accompaniment and a wider usable range of engine speed, while providing a higher degree of reliability in respect of the control system. Another important advantage is that engagement of the supercharger 6 takes place smoothly, without the charging pressure, or booster pressure, falling to an impermissible level, which would be the case if the superchargers were both of the same size. This can be explained by the fact that the reduction of gas flow through the larger supercharger 5 is smaller and takes place at higher engine speeds.

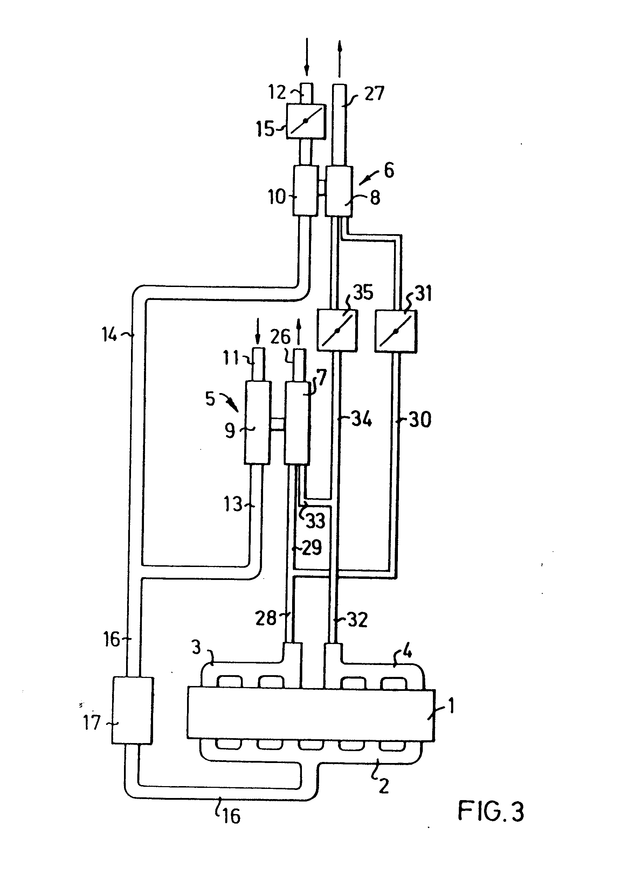

The embodiment of the arrangement according to the invention illustrated in Fig. 3 differs from the embodiment illustrated in Fig. 1 solely with respect to the connection between the outlets from the respective exhaust manifold sections 3 and 4 and respective turbines 7 and 8 in respective superchargers 5 and 6. In the embodiment of the arrangement illustrated in Fig. 3 turbines 7 and 8 with double inlets are used. In this case, the outlet from section 3 in the engine exhaust manifold is connected to a pipe 28, which is divided into branch pipes 29 and 30. The branch pipe 29 is connected to the one inlet of the turbine 7 in the supercharger 5, whereas the branch pipe 30 is connected to the one inlet in the turbine 8 in the supercharger 6. A closure valve 31 is incorporated in the branch pipe 30. The outlet from the section 4 in the engine exhaust manifold is connected to a pipe 32, which is divided into branch pipes 33 and 34. The branch pipe 33 is connected to the other inlet of the turbine 7 in the supercharger 5, whereas the branch pipe 34 is connected to the other inlet of the turbine 8 in the supercharger 6. The branch pipe 34 also incorporates a closure valve 35.

The method of operation of the arrangement illustrated in Fig. 3 corresponds essentially with the method of operation of the arrangement illustrated in Fig. 1. The supercharger 6 is engaged and disengaged with the aid of the valves 15, 31 and 35. Since the connections between the exhaust manifold sections 3,4 and the turbine 7,8 are achieved with separate pipes, it is ensured that the pressure pulses from the one exhaust manifold section will not influence the course of the pressure in the other section.

It will be understood that the invention is not limited to the described embodiment, and that modifications can be made within the scope of the following claims.

## CLAIMS

1. An arrangement for supercharging a multi-cylinder internal combustion engine (1), in which the engine exhaust manifold is divided into at least two separate sections (3,4), each of which is connected to a respective group of the cylinders of the engine (1), said arrangement including at least two superchargers (5,6), each comprising a turbine (7,8) for connection to the outlets of the exhaust manifold sections (3,4), and a compressor (9,10) which is driven by the turbine (7,8) and the outlet of which is connected to the inlet manifold (2) of the engine (1), characterized in that the turbine (7,8) in each supercharger(5,6) is connected to the outlets of at least two exhaust manifold sections (3,4) in a manner such that the pressure pulses in the exhaust gases from one section (3,4) are supplied to the turbine (7,8) substantially without influencing the course of the pressure in remaining sections (3,4), and in that a valve arrangement (25; 31,35) is arranged upstream of the turbine (8) in at least one of the superchargers (6), said supercharger, or said superchargers (6), being smaller than the remaining supercharger (5).

2. An arrangement according to Claim 1, characterized by at least one pulse converter (18) having an outlet (21) and a plurality of inlets (19,20) corresponding to the number of exhaust manifold sections (3,4) of the engine (1), the inlets (19,20) of said pulse converter being connected to a respective exhaust manifold section (3,4), and the outlet (21) of said pulse converter being connected to connecting pipes (23,24) which are connected to the turbines (7,8), each of said turbines having but a single inlet.

3. An arrangement according to Claim 2, characterized in that the valve arrangement (25) for each supercharger (6), to which the exhaust flow is to be regulated, comprises a valve arranged in respective connecting pipes (24).

4. An arrangement according to Claim 1, characterized in that each of the turbines (6,7) has a plurality of inlets corresponding to the number of engine exhaust manifold sections (3,4), the inlets of each turbine (7,8) being connected to the outlet from a respective one of the sections (3,4).

5. An arrangement according to Claim 4, characterized in that the valve arrangement (31,35) for each supercharger (6) to which the exhaust flow is to be regulated comprises a valve for each inlet to the turbine (8).

6. An arrangement according to any of the Claims 1-5, characterized in that a valve arrangement (15) is placed preferably upstream of the compressor (10) for each supercharger (6) whose air flow is to be regulated.

FIG. 2

FIG.1

FIG. 3

0215754

2/2

## DOCUMENTS CONSIDERED TO BE RELEVANT

| Category | Citation of document with indication, where appropriate, of relevant passages | Relevant to claim | CLASSIFICATION OF THE APPLICATION (Int. Cl.4) |
|---|---|---|---|
| A | DE-B2-2 529 171 (EGLI) | 1 | F 02 B 37/00 |
| | - - - | | |
| A | DE-C2-2 818 447 (FUHRMANN) | 1 | |
| | - - - | | |
| A | US-A-3 786 630 (KUHN) | 2 | |
| | - - - | | |
| A | US-A-4 428 192 (DINGER & KLOTZ) | 3-6 | |
| | - - - | | |
| A | Derwent's abstract nr G 7220, K/20, SU-941-650 (DIESELCENT RESINS) | 2 | |
| | - - - - - | | |
| | | | **TECHNICAL FIELDS SEARCHED (Int. Cl.4)** |
| | | | F 02 B |

The present search report has been drawn up for all claims

| Place of search | Date of completion of the search | Examiner |
|---|---|---|
| STOCKHOLM | 08-10-1986 | BENGTSSON K. |